# EUROPEAN PATENT SPECIFICATION

(11) **EP 4 460 406 B1**
(45) Date of publication and mention of the grant of the patent: **11.03.2026**
(21) Application number: 23717860.3
(22) Date of filing: 31.03.2023
(51) Int. Cl.: B09B 3/35, B29C 70/02, B29C 70/30, B29B 17/00, B29B 17/04, B29C 70/12, B29K 105/08, B29K 309/08, B09B 101/75

(54) **A SYSTEM AND A METHOD FOR REUSE OF WASTE FIBERGLASS-COMPRISING COMPOSITE MATERIALS IN NEW PRODUCTS**
SYSTEM UND VERFAHREN ZUR WIEDERVERWENDUNG VON GLASFASERABFALLHALTIGEN VERBUNDSTOFFMATERIALIEN IN NEUEN PRODUKTEN
SYSTÈME ET PROCÉDÉ DE RÉUTILISATION DE DÉCHETS DE MATÉRIAUX COMPOSITES COMPRENANT DES FIBRES DE VERRE USAGÉES DANS DE NOUVEAUX PRODUITS

(43) Date of publication of application: 13.11.2024
(73) Proprietor: Reba d.o.o., 8332 Gradac (SI)
(72) Inventor: SEGINA, Bojan, 8332 Gradac (SI)
(74) Representative: Patentni Biro AF d.o.o.
(86) International application number: PCT/EP2023/058596
(87) International publication number: WO 2024/199681

(56) References cited:
- WO-A1-2013/164784
- HENRY COLORADO-LOPERA: "Manufacturing processes, life cycle analysis, and future challenges for wind turbine blades", 17 August 2022 (2022-08-17), pages 1 - 12, XP093086434, Retrieved from the Internet <URL:https://www.redalyc.org/journal/5537/553775188002/html/> [retrieved on 20230927]

## Description

### Field of the invention

The present invention belongs to the field of disposing solid waste, more precisely to the field of devices for transforming solid waste into something useful. The present invention relates to a system and a method for reuse of waste fiberglass-comprising composite materials, particularly polyester and fiberglass waste, in new products.

### Background of the invention and the technical problem

Industries producing various products such as wind turbine blades, bathroom equipment, polyester boats, ultra-light aeroplanes, cisterns, truck cabins, and other components used in automotive industry have a problem with waste in the production process. The industries use composite materials, production of which increases every year. About 90% of the mentioned composite materials represent fiberglass reinforced plastics. Presently, the recycling of these composites is not achieved in a satisfying manner, mostly because the composite material following cross-linking cannot be remelted or remoulded or the fiberglass fibres are destroyed. Furthermore, the most common thermosetting resins, such as polyester and epoxy resin, cannot be depolymerised to their original constituents.

Consequently, most of the waste glass fibre composites are stored in landfills, burned or buried, thus representing an environmental issue and also an economical issue as such disposal can be very expensive.

The technical problem, which is addressed by the present invention, is thus designing a device and a method for recycling or reuse of the composite materials, particularly polyester and fiberglass, in order to allow manufacturing of new products.

### Prior art

Several technologies have been proposed for recycling thermoset composites. For example, some known solutions are intended for recovering inorganic fibres as described in patent applications WO2015011490, US20180230285, and EP2119741. The present invention does not recycle the composite materials by recovering only glass fibres, hence it differs from these solutions.

Patent application EP3216825A1 describes a method for recycling waste materials, preferably composite materials or glass from industrial waste, comprising steps of:
- reducing waste material to powder by grinding;
- preparing a suspension of a crosslinking agent in water;
- possibly adding, to the suspension of point 2), the powder obtained at point 1) and a source of ions;
- subjecting the mixture of point 3) to shaking up to formation of a hydrogel;
- proceeding to freeze-drying of the hydrogel, obtaining a porous foam.

This differs from the present invention, as it does not use any hydrogel, freeze-drying or foam creation.

Patent application CA3154288A1 describes a method and apparatus for recovering fibres from fibre reinforced polymer (FRP) materials uses a thermomechanical process to produce high quality recovered fibres and powdered polymer resin. The thermo-(cryo-) mechanical process uses a combination of a selected range of temperatures and mechanical force, and is chemical and solvent-free, and produces zero waste. The method comprises a step of subjecting the FRP material to a selected temperature within a range of about -150 °C to about 350 °C. Fibre length remains unchanged after processing and mechanical properties of the recovered fibres are comparable to or better than those of virgin fibres. The recovered fibres and powdered polymer resin may be used to make new FRP products.

Patent application WO2013164784A1 discloses a process of recycling a fibre-reinforced polymeric material comprising the following steps:
a) crushing said material so as to reduce it into fragments;
b) mixing the material obtained in the previous step with a liquid adhesive, said step b) being carried out by nebulizing said adhesive and simultaneously stirring the particles of the fibre-reinforced polymeric material so that a thin layer of adhesive is deposited on the surface substantially of each particle of fibre-reinforced polymeric material;
c) pouring the mixture obtained in step b) into a mould;
d) applying a pressure,
wherein said first step a), it is provided a step a') of grinding at least a portion of the fragments obtained in said step a) so as to obtain granules of dimensions between 2 and 8 mm, and subsequent to said step a'), it is provided a step a") of pulverizing at least a portion of the granules obtained in step a') so as to obtain particles of dimensions smaller than 1 mm.

This solution proposes a new step of moulding the recycled materials followed by applying pressure. The present invention, however, does not comprise re-moulding or any other similar step.

EP2878419A1 relates to a method of recycling scraps or offcuts of uncured composite material having reinforcing fibres and uncured polymer matrix material, comprising the steps of:
- introducing the scraps or offcuts into a mixing device directly;
- mixing the scraps or offcuts in the mixing device to blend uncured polymer matrix material and reinforcing fibres of the scraps or offcuts into a generally homogenous or consistent mixture; and
- feeding or conveying the said mixture from the mixing device into a shaping mechanism to form a component or semifinished product and preferably on a continuous basis.

This document also discloses a corresponding system for recycling scraps or offcuts of an uncured composite material. Said system, further comprises a film applicator device configured to apply a film layer from a film roll to at least one side of the mixture All these solutions differ from the present invention, as it uses a different method of re-use or as it has a different application device.

Olivera-Castillo et al (2022; https://doi.org/10.18273/revuin.v21n4-2022002) disclose manufacturing, life cycle, and dismantling of wind turbines. The authors cite two methods of material recycling, wherein some components are ground and fibrous materials are mixed with compounds or binders such as concrete, cement, or polymeric resins. The problem is that the fibres are too short and the invention aims to solve this problem.

### Description of the solution to the technical problem

The invention overcomes the weaknesses of existing approaches and enables sustainable and cost-efficient recycling of composite materials. The technical problem is solved as defined in the independent claims. Preferred embodiments of the invention are defined in the dependent claims. The first aspect of the invention relates to a device for recycling composite materials, the second aspect to a method for recycling composite materials, and the third to a product made from the recycled material using the device and/or the method.

The system according to the invention comprises two devices, wherein the first device is a grinding device for grinding the waste composite material to be processed and the second device is for application of the ground waste, i.e., for reuse of the processed waste.

The grinding device is arranged for grinding the composite waste material and comprises:
- a first funnel or an inlet for loading and leading waste material towards grinding means,
- grinding means for grinding the composite waste material coming from the funnel,
- a sieve with openings having a maximum size of 4 mm for filtering ground resin particles larger than 4 mm, wherein the fiberglass fibres can pass through said openings due to their fibrous nature, i.e. small diameter,
- optionally a cooling system arranged to cool the grinding device as due to waste resin in the composite waste material the mixture tends to heat, for preventing combustion of generated powder and particles during grinding,
- a filter system, preferably an ATEX (atmosphere explosive) filter system, for preventing inhalation of created particles,
- a second funnel or an outlet for leading the ground waste composite material into a suitable collector, container, waste bag or any other similar receptacle, preferably to a large waste bag,
- a small dust particles waste container provided with suitable, preferably replaceable, filters, said small dust particles waste container.

In a preferred embodiment, the grinding machine may be a rebuilt hammer for wood grinding, wherein the rebuilding is considered presence of the above-mentioned sieve and the cooling system. The hammer applies force to provided waste and thus decreases the size of waste parts and particles.

The cooling system may be an external cooling system, such as a fan, a cooler or a similar device arranged to cool the grinding device by blowing cool air towards the grinding device. Cooling is preferred due to presence of resins, which may ignite during grinding. Alternatively, the cooling system may be internal, i.e., integrated in the grinding device as channels or any other suitable construction and may use any colling medium known to the skilled person.

Once the waste is ground, the container with collected waste is connected to the second, application device is for application of the ground waste, i.e., for reuse of the processed waste. Said second device comprises at least the following components:
- the container (hopper) with the collected waste material with a filter system for filtration to prevent contamination of environmental air,
- a mixing and dosing container connected to the container with collected waste in any suitable manner, wherein the mixing and dosing container ensures suitable dosing of the waste material and is thus provided with:
   ∘ an outlet for leading material to a tube for spraying (application of ground waste material comprising fiberglass fibres),
   ∘ at least one sensor for material flow on the basis of which dosing of the waste material may be regulated, and
   ∘ an integrated mixing system (churn), preferably shaped as paddles, to prevent fiberglass hawing in front of the tube,
- the tube connected to the outlet of the mixing and dosing container with a diameter larger than the largest length of fiberglass fibres to prevent hawing of fibres, usually the range of tube diameter is 20 to 50 mm, wherein the outlet of the tube is positioned at an angle from 40 to 60 degrees, which allows good and even waste and resin binding in the air before being sprayed onto a product.
- a second tube connected to a resin-filled container in order to lead fresh binding resin from the resin-filled container to the exit of the tube for spraying waste fiberglass-comprising particles for re-use,
- an under-pressure pump for allowing transport along to tube, wherein the pump comprises a tubular section with a first wider part on one end and a second wider part on the opposite end, wherein the angle of the sides of the first part to the tubular section is larger than the angle of the sides of the second part to the tubular section and wherein the wider parts are longer than 20 mm and preferably the second wider part is longer than the first wider part, and
- a grounding cable for grounding all metallic parts of the device to a grounding line, because a static charge can build up quickly and cause fire or explosion.

The shape of the pump prevents hawing of the fiberglass-comprising waste material, hence good flow towards the exit of the tube is ensured. In a preferred embodiment, the under-pressure pump is made from stainless steel material to ensure longer operation as the fiberglass is aggressive for the material of the pump. The stainless steel may be heat treated for improved durability.

The principle of dosing is preferably based on injector blasting system, which is well-known to the person skilled in the art. Other dosing means can be used to provide sufficient flow of the ground waste material to the tube for application of ground waste material.

The tubes are made from a material known to the person skilled in the art as suitable for use with fiberglass materials and resins.

The tube sprays the waste fiberglass-comprising material towards the product in the process of manufacturing, wherein the product is conveniently placed on a horizontal holder, a plate, or a table. The specific angle of the tube enables that less material goes to waste (i.e., more is sprayed on the product) and thus better waste re-use. When the fiberglass-comprising waste material and the fresh resin are mixed, a chemical reaction occurs and the combined material quickly solidifies as a layer on the product in the process of manufacturing.

Spraying reused waste into new products does not require new fiberglass, but only new binding resin, which reduces the need for new fiberglass fibres. The size of the fiberglass fibres may be adjusted in the process of grinding, hence different requirements may be met.

In a specifically preferred embodiment, a robot is used for all manipulation, as the resin and the fiberglass parts are dangerous for the operator's health.

As a second aspect of the invention, a method for reuse of waste fiberglass-comprising composite materials in new products comprises the following steps:
a) supplying waste fiberglass-comprising composite material to a grinding device,
b) grinding of waste material into smaller parts and particles in the grinding device,
c) leading the ground waste material into a mixing and dosing container, and optionally adjusting material flow through the mixing and dosing container,
d) leading ground waste material from the mixing and dosing container to a tube for spraying the fiberglass-comprising waste material onto a product in a manufacturing process, wherein a pump enables transport through the tube,
e) leading new binding resin via a second tube that is aligned with the tube for spraying the fiber-glass comprising waste material,
f) simultaneously spraying the binding resin and the fiberglass-comprising waste material to form a solid layer on the product.

The method may further comprise additional steps, such as:
g) optionally curing or hardening of the layer on the product, and/or
h) optionally repeating previous steps to make several layers on the product, and/or
i) optionally further processing of the product depending on its final use.

The present disclosure also covers a product made from the material prepared by the system and/or the method according to the invention, wherein the product may be any product made in moulds and/or with added layers of composite materials comprising fiberglass. Typical examples are bathroom products, such as bath tubs. Further, sport boats, sailing boats, yachts, truck cabs, parts for vehicles such as spoilers, blades for wind turbines, sewer pipes and manholes, etc. are also possible.

The invention enables safe, reliable, and cost-efficient procedure for recycling of composite material and manufacturing of an ecological product. At the same time, the consumption of new fibreglass is limited, as the recycled fibreglass is used in new products.

The invention will be described in further detail based on exemplary embodiments and figures, which show:
- Figure 1: a grinding device according to a possible embodiment from two sides
- Figure 2: an application device for application of the ground waste, i.e., for reuse of the processed waste according to a possible embodiment
- Figure 3: a robotic arm with the tube for spraying fiberglass-comprising waste composite material and the tube for providing fresh binding resin
- Figure 4: the under-pressure pump body

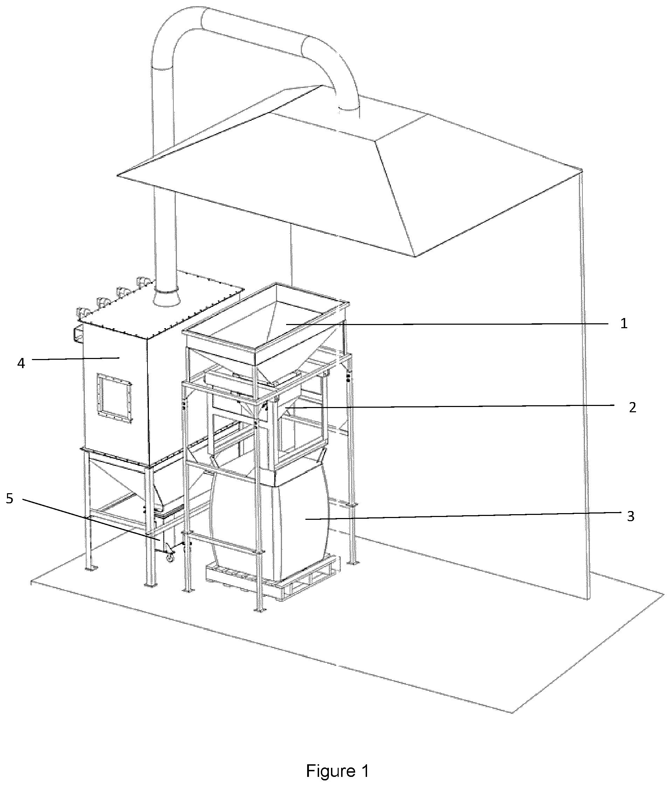

Figure 1 shows a grinding device according to a possible embodiment, which is arranged for grinding the composite waste material. The grinding device comprises:
- a first funnel 1 or an inlet for loading and leading waste material towards grinding means 2,
- grinding means 2 for grinding the composite waste material coming from the funnel 1,
- a sieve (not visible) with openings having a maximum size of 4 mm for filtering ground resin particles larger than 4 mm, wherein the fiberglass fibres can pass through said openings due to their fibrous nature, i.e. small diameter,
- a cooling system (not shown) arranged to cool the grinding device 2 as due to waste resin in the composite waste material the mixture tends to heat, for preventing combustion of generated powder and particles during grinding,
- a filter system 4, preferably an ATEX (atmosphere explosive) filter system, for preventing inhalation of created particles,
- a second funnel (not shown) or an outlet for leading the ground waste composite material into a suitable collector, container, waste bag or any other similar receptacle 3, preferably to a large waste bag,
- a small dust particles waste container 5 provided with suitable, preferably replaceable, filters, said small dust particles waste container.

The cooling system is an external cooling system, such as a fan, a cooler or a similar device arranged to cool the grinding device by blowing cool air towards the grinding device.

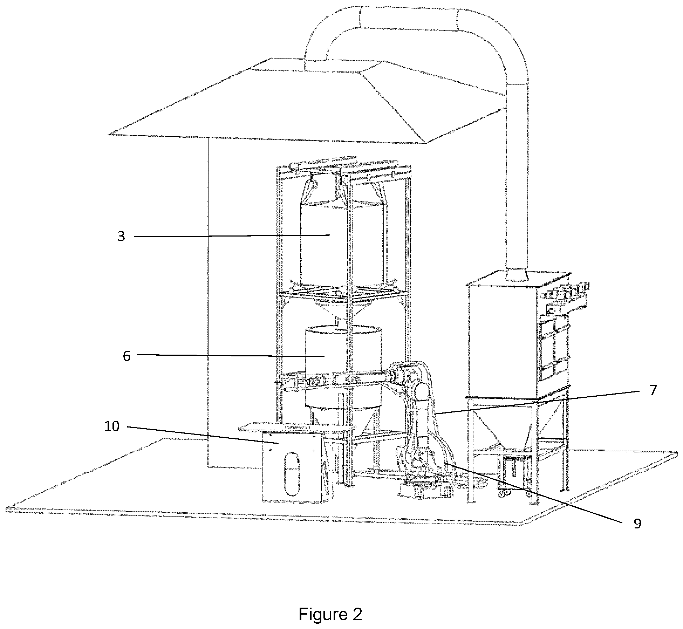

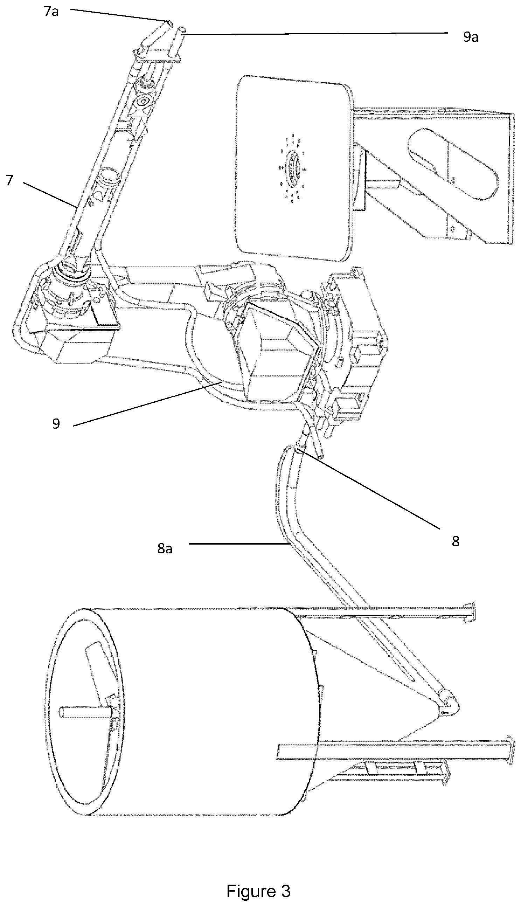

Figures 2 and 3 show the application device for application of the ground waste, i.e., for reuse of the processed waste according to a possible embodiment, which comprises at least the following components:
- the container 3 (hopper) with the collected waste material with a filter system for filtration to prevent contamination of environmental air, which may be the same as in the grinding device or a different one, to which the ground material is transferred,
- a mixing and dosing container 6 connected to the container with collected waste in any suitable manner, wherein the mixing and dosing container ensures suitable dosing of the waste material and is thus provided with:
   ∘ an outlet for leading material to a tube for spraying,
   ∘ at least one sensor for material flow on the basis of which dosing of the waste material may be regulated, and
   ∘ an integrated mixing system (churn), preferably shaped as paddles, to prevent fiberglass hawing in front of the tube,
- the tube 7 for spraying fiberglass comprising waste material connected to the outlet of the mixing and dosing container 6 with a diameter larger than the largest length of fiberglass fibres to prevent hawing of fibres, usually the range of tube diameter is 20 to 50 mm, wherein the tube is positioned at an angle from 40 to 60 degrees, which allows good and even waste and resin binding in the air before being sprayed onto a product on a suitable support 10,
- a second tube 9 connected to a resin-filled container (not shown) in order to lead fresh binding resin from the resin-filled container to the exit 9a of the tube for spraying waste fiberglass-comprising particles for re-use,
- an under-pressure pump 8 (figure 3) provided between the mixing and dosing container and the outlet of the first tube for application of ground waste material, said pump being provided with an air compressor for providing compressed air and an air pipe connected to an inlet of the pump for leading air into the interior of the pump in order to achieve pump operation,
   wherein the pump comprises a tubular section with a first wider part on one end and a second wider part on the opposite end,
   wherein the angle of the sides of the first part to the tubular section is larger than the angle of the sides of the second part to the tubular section, and
   wherein the wider parts are longer than 20 mm and the second wider part is longer than the first wider part, and
- a grounding cable (not shown) for grounding all metallic parts of the device to a grounding line, because a static charge can build up quickly and cause fire or explosion.

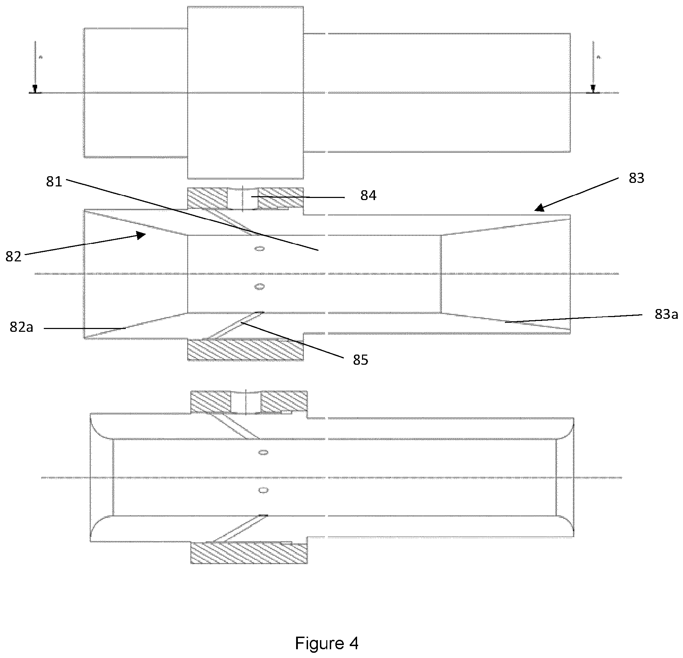

The preferred length of the tube 7 for spraying, i.e. application of ground fiberglass-comprising waste material is 2 to 8 m, most preferably 5 m, wherein the wall thickness of the tube is preferably between 6 and 10 mm, most preferably 7.5 mm, as this thickness provides optimal life-span of the tube. The fiberglass fibres are aggressive for the material, hence, said thickness is preferred. Furthermore, the under-pressure pump 8 may be provided at any location of the tube. The optimal positioning of the under-pressure pump is approximately in the middle of the tube as shown in figure 2. Other positions are nevertheless also possible and depend on the tube diameter, characteristics of the under-pressure pump and the length of the pipe. These adjustments are obvious to a skilled person. The diameter of the pipe of the under-pressure pump is usually smaller than the diameter of the tube. The pump operates in a known manner, wherein air 8a is connected directly to the inlet 84 of the pump 8 and through the holes on the inside of the pump further shaped as air channels 85 at an angle create flow. Said flow ensures flow of the particles towards the outlet of the tube. The inlet and air channels are depicted in figure 4.

Figure 3 shows an embodiment with a robotic arm provided with the tube for spraying fiberglass-comprising waste composite material and the second tube for providing binding resin. Said second tube is connected to a suitable container with fresh resin, which is not shown in the figure. The under-pressure pump is visible in this figure.

Figure 4 shows the under-pressure pump from outside (above), in the cross-section (middle) and in an original cross-section (below), which has been reshaped in order to achieve optimal operation. The under-pressure pump has:
- the tubular section 81 with the first wider part 82 on one end and the second wider part 83 on the opposite end, wherein:
   ∘ the angle of the sides 82a of the first part 82 to the tubular section is larger than the angle of the sides 83a of the second part 83 to the tubular section 81, and
   ∘ the wider parts 82, 83are longer than 20 mm and the second wider part 83 is longer than the first wider part 82.

The preferred inner diameter of the tubular section 81 is 12 mm, the angle of the sides 82a of the first part 82 is 13 degrees and the angle of the sides 83a of the second part 83 is 7 degrees.

## Claims

1. A system for reuse of waste fiberglass-comprising composite materials, wherein said system comprising at least:
- a grinding device for grinding the waste fiberglass-comprising composite to be re-used, and
- an application device for applying the processed composite material,
wherein said devices are connected to lead the material from the grinding device to the application device,
**characterized in that**
the application device comprises:
- a container (3) with ground waste material with a filter system for filtration to prevent contamination of environmental air,
- a mixing and dosing container (6) connected to the container (3) with collected waste in any suitable manner, wherein the mixing and dosing container (6) ensures suitable dosing of the waste material and is thus provided with:
∘ an outlet for leading material to a tube (7) for spraying,
∘ at least one sensor for material flow on the basis of which dosing of the waste material may be regulated, and
∘ an integrated mixing system to prevent fiberglass hawing in front of the tube,
- the tube (7) for spraying connected to the outlet of the mixing and dosing container, said tube (7) having a diameter larger than the largest length of fiberglass fibres to prevent hawing of fibres, wherein an outlet (7a) of the tube (7) is positioned at an angle from 40 to 60 degrees,
- a second tube (9) connected to a resin-filled container in order to lead fresh binding resin from the resin-filled container to the outlet (7a) of the tube (7) for spraying waste fiberglass-comprising particles for re-use,
- an under-pressure pump (8) for allowing transport along the tube (7), wherein the pump (8) comprises a tubular section (81) with a first wider part (82) on one end and a second wider part (83) on the opposite end, wherein the angle of sides (82a) of the first part (82) to the tubular section (81) is larger than the angle of sides (83a) of the second part (83) to the tubular section (81) and wherein the wider parts (82, 83) are longer than 20 mm, and
- a grounding cable for grounding all metallic parts of the device to a grounding line.

2. The system according to claim 1, wherein the range of tube (7) diameter is 20 to 50 mm.

3. The system according to claim 1 or claim 2, wherein the under-pressure pump (8) is shaped so that the second wider part (83) is longer than the first wider part (82).

4. The system according to any of the preceding claims, wherein the under-pressure pump (8) is shaped so an inner diameter of the tubular section (81) is 12 mm, the angle of the sides (82a) of the first part (82) is 13 degrees and the angle of the sides (83a) of the second part (83) is 7 degrees.

5. The system according to any of the preceding claims, wherein the under-pressure pump (8) is made from stainless steel, wherein stainless steel is preferably heat treated for improved durability.

6. The system according to any of the preceding claims, wherein the under-pressure pump (8) is approximately in the middle of the tube (7) for spraying fiberglass-comprising waste composite material.

7. The system according to any of the preceding claims, wherein a robot arm is provided with the tube (7) for spraying fiberglass-comprising waste composite material and the second tube (9) for spraying fresh binding resin.

8. The system according to any of the preceding claims, wherein the grinding device comprises:
- a first funnel (1) or an inlet for loading and leading waste material towards grinding means,
- grinding means (2) for grinding the composite waste material coming from the funnel,
- a sieve with openings having a maximum size of 4 mm for filtering ground resin particles larger than 4 mm, wherein the fiberglass fibres can pass through said openings due to their fibrous nature, i.e. small diameter,
- a filter system (4), preferably an ATEX atmosphere explosive filter system, for preventing inhalation of created particles,
- a second funnel or an outlet for leading the ground waste composite material into a suitable collector, container, waste bag or any other similar receptacle, preferably to a large waste bag,
- a small dust particles waste container (5) provided with suitable, preferably replaceable, filters, said small dust particles waste container.

9. The system according to the preceding claim, wherein the grinding device additionally comprises a cooling system arranged to cool the grinding device.

10. The system according to the preceding claim, wherein the cooling system is an external cooling system or an integrated cooling system, wherein the cooling system is preferably an external cooling system designed as a fan.

11. The system according to any preceding claim, wherein the waste fiberglass-comprising composite material is a polyester-fiberglass material.

12. The system according to any claim from 1 to 11, wherein the tube (7) for spraying fiberglass-comprising waste composite material and the second tube (9) for spraying fresh bending resin is used to form a product including at least one of a bathroom product, a sport boat, a sailing boat, a yacht or its part, a truck cab, a part for vehicles such as a spoiler, or a blade for wind turbines.

13. A method for reuse of waste fiberglass-comprising composite materials in new products, wherein said method comprises the following steps:
- supplying waste fiberglass-comprising composite material to a grinding device,
- grinding of waste material into smaller parts and particles in the grinding device,
- leading the ground waste material into a mixing and dosing container, and optionally adjusting material flow through the mixing and dosing container,
- leading ground waste material from the mixing and dosing container to a tube for spraying the fiberglass-comprising waste material onto a product in a manufacturing process, wherein a pump enables transport through the tube,
- leading new binding resin via a second tube that is aligned with the tube for spraying the fiber-glass comprising waste material,
- simultaneously spraying the binding resin and the fiberglass-comprising waste material to form a solid layer on the product.

14. The method according to the preceding claim, wherein the method further comprises additional steps of:
- curing or hardening of the layer on the product, and/or
- repeating previous steps to make several layers on the product, and/or
- further processing of the product depending on its final use.

15. The method according to claim 13 or claim 14 wherein the solid layer on the product forms at least one of a bathroom product, a sport boat, a sailing boat, a yacht or its part, a truck cab, a part for vehicles such as a spoiler, or a blade for wind turbines.

## Patentansprüche

1. System zur Wiederverwendung von glasfaserabfallhaltigen Verbundstoffmaterialien, wobei das System mindestens Folgendes umfasst:
- eine Mahlvorrichtung zum Mahlen der wiederzuverwendenden glasfaserabfallhaltigen Verbundstoffmaterialien und
- eine Anwendungsvorrichtung zum Aufbringen der verarbeiteten Verbundstoffmaterialien,
wobei die Vorrichtungen verbunden sind, um das Material von der Mahlvorrichtung zur Anwendungsvorrichtung zu leiten,
**dadurch gekennzeichnet, dass**
die Anwendungsvorrichtung Folgendes umfasst:
- einen Behälter (3) mit gemahlenem Abfallmaterial mit einem Filtersystem zur Filtration, um eine Kontamination der Umgebungsluft zu verhindern,
- einen Misch- und Dosierbehälter (6), der mit dem Behälter (3) mit gesammeltem Abfallmaterial in geeigneter Weise verbunden ist, wobei der Misch- und Dosierbehälter (6) eine geeignete Dosierung des Abfallmaterials sicherstellt und daher ausgestattet ist mit:
∘ einem Auslass zum Leiten des Materials zu einem Rohr (7) zum Sprühen,
∘ mindestens einem Sensor für den Materialfluss, auf dessen Grundlage die Dosierung des Abfallmaterials geregelt werden kann, und
∘ einem integrierten Mischsystem, um ein Verheddern der Glasfasern vor dem Rohr zu verhindern,
- dem Rohr (7) zum Sprühen, das mit dem Auslass des Misch- und Dosierbehälters verbunden ist, wobei das Rohr (7) einen Durchmesser aufweist, der größer ist als die größte Länge der Glasfasern, um ein Verheddern der Fasern zu verhindern, wobei ein Auslass (7a) des Rohres (7) in einem Winkel von 40 bis 60 Grad positioniert ist,
- einem zweiten Rohr (9), das mit einem harzgefüllten Behälter verbunden ist, um frisches Bindeharz von dem harzgefüllten Behälter zu dem Auslass (7a) des Rohres (7) zu leiten, um glasfaserabfallhaltige Partikel zur Wiederverwendung zu sprühen,
- einer Unterdruckpumpe (8), um den Transport entlang des Rohres (7) zu ermöglichen, wobei die Pumpe (8) einen rohrförmigen Abschnitt (81) mit einem ersten erweiterten Teil (82) an einem Ende und einem zweiten erweiterten Teil (83) am gegenüberliegenden Ende umfasst, wobei der Winkel der Seiten (82a) des ersten Teils (82) zum rohrförmigen Abschnitt (81) größer ist als der Winkel der Seiten (83a) des zweiten Teils (83) zum rohrförmigen Abschnitt (81) und wobei die erweiterten Teile (82, 83) länger als 20 mm sind, und
- einem Erdungskabel zum Erden aller metallischen Teile der Vorrichtung an eine Erdungsleitung.

2. Das System nach Anspruch 1, wobei der Durchmesserbereich des Rohres (7) 20 bis 50 mm beträgt.

3. Das System nach Anspruch 1 oder Anspruch 2, wobei die Unterdruckpumpe (8) so ausgeformt ist, dass der zweite erweiterte Teil (83) länger ist als der erste erweiterte Teil (82).

4. Das System nach einem der vorstehenden Ansprüche, wobei die Unterdruckpumpe (8) so ausgeformt ist, dass ein Innendurchmesser des rohrförmigen Abschnitts (81) 12 mm beträgt, der Winkel der Seiten (82a) des ersten Teils (82) 13 Grad beträgt und der Winkel der Seiten (83a) des zweiten Teils (83) 7 Grad beträgt.

5. Das System nach einem der vorstehenden Ansprüche, wobei die Unterdruckpumpe (8) aus Edelstahl besteht, wobei der Edelstahl vorzugsweise wärmebehandelt ist, um eine längere Haltbarkeit sicherzustellen.

6. Das System nach einem der vorstehenden Ansprüche, wobei sich die Unterdruckpumpe (8) ungefähr in der Mitte des Rohres (7) zum Sprühen von glasfaserabfallhaltigen Verbundstoffmaterialien befindet.

7. Das System nach einem der vorstehenden Ansprüche, wobei ein Roboterarm mit dem Rohr (7) zum Sprühen von glasfaserabfallhaltigen Verbundstoffmaterialien und dem zweiten Rohr (9) zum Sprühen von frischem Bindeharz ausgestattet ist.

8. Das System nach einem der vorstehenden Ansprüche, wobei die Mahlvorrichtung Folgendes umfasst:
- einen ersten Trichter (1) oder einen Einlass zum Laden und Leiten des Abfallmaterials zu Mahlmitteln,
- Mahlmittel (2) zum Mahlen des vom Trichter kommenden **Verbundabfallmaterials,**
- ein Sieb mit Öffnungen mit einer maximalen Größe von 4 mm zum Filtern von gemahlenen Harzpartikeln, die größer als 4 mm sind, wobei die Glasfasern aufgrund ihrer faserigen Natur, d. h. ihres kleinen Durchmessers, durch die Öffnungen hindurchtreten können,
- ein Filtersystem (4), vorzugsweise ein explosionsgeschütztes ATEX-Atmosphären-Filtersystem, um das Einatmen der erzeugten Partikel zu verhindern,
- einen zweiten Trichter oder einen Auslass zum Leiten des gemahlenen Abfallverbundmaterials in einen geeigneten Auffänger, Behälter, Abfallsack oder ein ähnliches Aufnahmemittel, vorzugsweise in einen großen Abfallsack,
- einen Behälter (5) für feine Staubpartikel, der mit geeigneten, vorzugsweise austauschbaren Filtern versehen ist.

9. Das System nach dem vorstehenden Anspruch, wobei die Mahlvorrichtung zusätzlich ein Kühlsystem umfasst, das angeordnet ist, um die Mahlvorrichtung zu kühlen.

10. Das System nach dem vorstehenden Anspruch, wobei das Kühlsystem ein externes Kühlsystem oder ein integriertes Kühlsystem ist, wobei das Kühlsystem vorzugsweise ein externes Kühlsystem ist, das als Lüfter ausgebildet ist.

11. Das System nach einem der vorstehenden Ansprüche, wobei die glasfaserabfallhaltigen Verbundstoffmaterialien Polyesterglasfasermaterialien sind.

12. Das System nach einem der Ansprüche 1 bis 11, wobei das Rohr (7) zum Sprühen von glasfaserabfallhaltigen Verbundstoffmaterialien und das zweite Rohr (9) zum Sprühen von frischem Bindeharz verwendet wird, um ein Produkt zu formen, das mindestens eines der folgenden umfasst: ein Badezimmerprodukt, ein Sportboot, ein Segelboot, eine Yacht oder ein Teil davon, eine LKW-Kabine, ein Teil für Fahrzeuge wie ein Spoiler oder ein Rotorblatt für Windturbinen.

13. Das Verfahren zur Wiederverwendung von glasfaserabfallhaltigen Verbundstoffmaterialien in neuen Produkten, wobei das Verfahren die folgenden Schritte umfasst:
- Zuführen von glasfaserabfallhaltigen Verbundstoffmaterialien zu einer Mahlvorrichtung,
- Mahlen der Abfallmaterialien in kleinere Teile und Partikel in der Mahlvorrichtung,
- Leiten der gemahlenen Abfallmaterialien in einen Misch- und Dosierbehälter, und optionales Einstellen des Materialflusses durch den Misch- und Dosierbehälter,
- Leiten der gemahlenen Abfallmaterialien vom Misch- und Dosierbehälter zu einem Rohr zum Sprühen der glasfaserabfallhaltigen Verbundstoffmaterialien auf ein Produkt in einem Herstellungsprozess, wobei eine Pumpe den Transport durch das Rohr ermöglicht,
- Leiten von neuem Bindeharz über ein zweites Rohr, das mit dem Rohr zum Sprühen der glasfaserabfallhaltigen Verbundstoffmaterialien ausgerichtet ist,
- gleichzeitiges Sprühen des Bindeharzes und der glasfaserabfallhaltigen Verbundstoffmaterialien, um eine feste Schicht auf dem Produkt zu bilden.

14. Das Verfahren nach dem vorstehenden Anspruch, wobei das Verfahren ferner zusätzliche Schritte umfasst:
- Aushärten oder Härten der Schicht auf dem Produkt und/oder
- Wiederholen der vorstehenden Schritte, um mehrere Schichten auf dem Produkt zu erzeugen, und/oder
- weiteres Verarbeiten des Produkts abhängig von seiner endgültigen Verwendung.

15. Das Verfahren nach Anspruch 13 oder Anspruch 14, wobei die feste Schicht auf dem Produkt mindestens eines der folgenden Produkte bildet: ein Badezimmerprodukt, ein Sportboot, ein Segelboot, eine Yacht oder ein Teil davon, eine LKW-Kabine, ein Teil für Fahrzeuge wie ein Spoiler oder ein Rotorblatt für Windturbinen.

## Revendications

1. Système et procédé de réutilisation de déchets de matériaux composites comprenant des fibres de verre usagées dans de nouveaux produits, ledit système comprenant au moins :
- un dispositif de broyage pour le broyage des déchets de matériaux composites comprenant des fibres de verre destinés à être réutilisés, et
- un dispositif d'application pour l'application du matériau composite transformé, où lesdits dispositifs sont reliés pour que le matériau du dispositif de broyage soit dirigé vers le dispositif d'application,
**caractérisés par le fait que**
le dispositif d'application comprend :
- un bac (3) empli de déchets de matériaux broyés, équipé d'un système de filtration pour éviter la contamination de l'air ambiant,
- un bac de mélange et de dosage (6) relié au bac (3) empli de déchets d'une façon appropriée quelconque, ledit bac de mélange et de dosage (6) assurant le dosage adéquat des déchets de matériaux et étant par conséquent doté :
∘ d'une sortie pour l'envoi du matériau dans un tube (7) destiné à la pulvérisation,
∘ d'au moins un capteur pour le débit du matériau, grâce auquel le dosage des déchets de matériau peut être régulé, et
∘ d'un système de mélange intégré pour empêcher les fibres de verre de stagner devant le tube,
- le tube (7) pour la pulvérisation raccordé à la sortie du bac de mélange et de dosage, ledit tube (7) ayant un diamètre supérieur à la longueur des fibres de verre les plus longues pour éviter la stagnation des fibres, où une sortie (7a) du tube (7) est positionnée à un angle compris entre 40 et 60 degrés,
- un second tube (9) raccordé à un bac empli de résine afin d'acheminer un liant à base de résine fraîche depuis le bac empli de résine jusqu'à la sortie (7a) du tube (7) destiné à la pulvérisation de particules de déchets comprenant des fibres de verre pour qu'elles soient réutilisées,
- une pompe à pression (8) permettant l'acheminement le long du tube (7), la pompe (8) comprenant une section tubulaire (81) dotée d'une première partie plus large (82) à une extrémité et d'une seconde partie plus large (83) à l'extrémité opposée, où l'angle des côtés (82a) de la première partie (82) de la section tubulaire (81) est supérieur à l'angle des côtés (83a) de la seconde partie (83) de la section tubulaire (81) et où les parties plus larges (82, 83) sont d'une longueur supérieure à 20 mm, et
- un fil de mise à la terre pour la mise à la terre de toutes les parties métalliques du dispositif par le biais d'une ligne de mise à la terre.

2. Système selon la revendication 1, dans lequel la plage de diamètre du tube (7) est comprise entre 20 et 50 mm.

3. Système selon la revendication 1 ou la revendication 2, dans lequel la pompe à pression (8) est conçue de façon à ce que la seconde partie plus large (83) soit plus longue que la première partie plus large (82).

4. Système selon l'une quelconque des revendications précédentes, où la pompe à pression (8) est conçue de façon à ce qu'un diamètre interne de la section tubulaire (81) soit de 12 mm, que l'angle des côtés (82a) de la première partie (82) soit de 13 degrés et que l'angle des côtés (83a) de la seconde partie (83) soit de 7 degrés.

5. Système selon l'une quelconque des revendications précédentes, où la pompe à pression (8) est composée d'acier inoxydable, lequel acier inoxydable est de préférence soumis à un traitement thermique pour une durabilité améliorée.

6. Système selon l'une quelconque des revendications précédentes, où la pompe à pression (8) est située approximativement au milieu du tube (7) destiné à la pulvérisation des déchets de matériaux composites comprenant des fibres de verre.

7. Système selon l'une quelconque des revendications précédentes, où un bras robotisé est pourvu avec le tube (7) destiné à la pulvérisation des déchets de matériaux composites comprenant des fibres de verre et avec le second tube (9) destiné à la pulvérisation de liant à base de résine fraîche.

8. Système selon l'une quelconque des revendications précédentes, où le dispositif de broyage comprend :
- un premier entonnoir (1) ou une arrivée pour le chargement et l'acheminement des déchets de matériaux vers le dispositif de broyage,
- un dispositif de broyage (2) pour le broyage des matériaux de déchets composites provenant de l'entonnoir,
- un tamis dont les orifices ont une taille maximale de 4 mm pour le filtrage des particules de résine broyées supérieures à 4 mm, où les fibres de verre peuvent passer dans lesdits orifices en raison de leur nature fibreuse, c.-à-d. leur petit diamètre,
- un système de filtrage (4), de préférence un système de filtrage pour atmosphère explosive ATEX, pour prévenir l'inhalation des particules obtenues,
- un second entonnoir ou une sortie pour acheminer les déchets de matériaux composites broyés dans un collecteur, un bac, un sac pour déchets approprié ou tout autre réceptacle similaire, de préférence un grand sac pour déchets,
- un petit conteneur à déchets pour particules de poussière (5) pourvu de filtres appropriés, de préférence remplaçables.

9. Système selon la revendication précédente, où le dispositif de broyage comprend en outre un système de refroidissement conçu pour refroidir le dispositif de broyage.

10. Système selon la revendication précédente, dans lequel le système de refroidissement est un système de refroidissement externe ou un système de refroidissement intégré où le système de refroidissement est de préférence un système de refroidissement externe conçu comme un ventilateur.

11. Système selon l'une quelconque des revendications précédentes, où les déchets de matériau composite comprenant des fibres de verre sont un matériau à base de polyester et fibres de verre.

12. Système selon l'une quelconque des revendications 1 à 11, dans lequel le tube (7) pour la pulvérisation des déchets de matériau composite comprenant des fibres de verre et le second tube (9) pour la pulvérisation de liant à base de résine fraîche sont utilisés pour former un produit comprenant au moins un des éléments suivants : accessoire de salle de bain, bateau de sport, voilier, yacht ou une de ses parties, cabine de camion, pièce de véhicule telle qu'un béquet, ou pale d'éolienne.

13. Procédé de réutilisation de déchets de matériaux composites comprenant des fibres de verre dans de nouveaux produits, ledit procédé comprenant les étapes suivantes :
- l'alimentation d'un dispositif de broyage en déchets de matériau composite comprenant des fibres de verre,
- le broyage de déchets de matériau en parties et particules plus petites dans le dispositif de broyage,
- l'acheminement des déchets de matériau broyés dans un bac de mélange et de dosage, et facultativement l'ajustement du débit de matériau dans le bac de mélange et de dosage,
- l'acheminement des déchets de matériau broyés du bac de mélange et de dosage vers un tube destiné à la pulvérisation des déchets de matériau comprenant des fibres de verre sur un produit dans le cadre d'un processus de fabrication, où une pompe permet le transport dans le tube,
- l'acheminement d'un liant à base de résine neuve via un second tube qui est aligné avec le tube destiné à la pulvérisation des déchets de matériau comprenant des fibres de verre,
- la pulvérisation simultanée du liant à base de résine et des déchets de matériau comprenant des fibres de verre afin de former une couche solide sur le produit.

14. Procédé selon la revendication précédente, dans lequel le procédé comprend en outre les étapes supplémentaires de :
- séchage ou durcissement de la couche projetée sur le produit, et/ou
- répétition des étapes précédentes pour former plusieurs couches sur le produit, et/ou
- transformation supplémentaire du produit en fonction de son utilisation finale.

15. Procédé selon la revendication 13 ou la revendication 14, dans lequel la couche solide sur le produit forme au moins un produit parmi ceux qui suivent : un accessoire de salle de bain, un bateau de sport, un voilier, un yacht ou une de ses parties, une cabine de camion, une pièce de véhicule telle qu'un béquet, ou une pale d'éolienne.
